# EUROPEAN PATENT SPECIFICATION

(11) **EP 0 525 815 B1**
(45) Date of publication and mention of the grant of the patent: **05.06.1996**
(21) Application number: 92113216.3
(22) Date of filing: 03.08.1992
(51) Int. Cl.: B01D 35/02, B01D 29/05, G01N 1/20

(54) **A filter for feeding samples to automatic and/or process equipments for physico-chemical analyses**
Filter für die Beschichtung einer automatischen und/oder Verfahrenseinrichtung mit Proben für physicochemische Analysen
Filtre pour le chargement des échantillons dans un équipement de traitement et/ou automatique pour analyses physicochimiques

(30) Priority: 02.08.1991 IT MI912200
(43) Date of publication of application: 03.02.1993
(73) Proprietor: Giovacchini, Lorenzo, I-20052 Monza (MI) (IT)
(72) Inventor: Giovacchini, Lorenzo, I-20052 Monza (MI) (IT)
(74) Representative: Marietti, Giuseppe

(56) References cited:
- US-A- 3 907 688

## Description

The present invention concerns a filter for continuously and directly feeding samples to automatic and/or process equipments for physico-chemical analyses, adapted to be mounted on the path of a fluid to be analysed and of the type comprising a filter body having a fluid inlet duct, an offtake connected to said duct and leading to a filtration chamber containing a filtering element, as well as an outlet from said chamber, downstream the filter element, for feeding the analytical instrument.

For the aforementioned applications so-called on-line filters and T filters, as well as so-called pot by-pass filters and T by-pass filters have been known and universally used so far; they allow, usually together, to draw a gaseous or liquid sample from a plant line and convey it to an instrument for physico-chemical analysis, such as a chromatograph, a mass spectrometer, an O₂ analyzer, an IR, UV analyser or the like, after having purified said sample from solid particles (contained in the sample or desultorily entrained by same). The commonest configuration comprises a by-pass filter, with a valve regulating the by-pass flowrate, whose outlet towards the analyser is serially connected to a pressure reducing valve, a safety valve, a manometer and finally an on-line filter, whose structure is substantially the one hereinabove defined.

It is obvious that a configuration such as the one as seen above involves very high costs and equally high complications due to all fittings, cut-to-size small tubes and any other element that results to be necessary. Futhermore, all these components involve very large dead volumes, that as known negatively affect the analyses, mostly quick analyses of liquid samples that must be vaporized (downstream the filter) to be introduced in vapour phase into the analyser. The on-line filter itself presents dead volumes ranging from 2.6 to 3.7 ml (not 100% renewable, mainly in T-filters), while the by-pass filter has dead volumes up to 40-60 ml.

US-A-3907688 dicloses a filter valve assembly, wherein the valve portion has a rotatably mounted gate which is deplaceable in three positions, namely a first position in which all the fed flowrate is directed to the filter, a second position in which all the fed flowrate passes through a valve channel and the filter is inoperative, a third position for blocking any flow through the valve.

Considering what above, the main object of the present invention is to provide a filter of the type initially defined, whose structure and configuration allow its use both as on-line filter and by-pass filter, namely as separator and filter, eventually to completely replace the above described configuration of by-pass filter plus on-line filter.

Another object of the present invention is to provide a filter of the aforesaid type, having different possible operation modes, which may also act as manifold connector for different accessories as necessary to the various required applications.

A further object is to provide a filter of the aforesaid type, in which dead volumes are reduced to a minimum, corresponding approximately to the half of dead volumes of known on-line filters and to 1/20 - 1/40 of dead volumes of known by-pass filters.

Still another object of the present invention is to provide a filter that, in the operation mode as separator and filter, i.e. as separating by-pass filter, may accomodate an accessory capable of providing forced dynamic separations that are sized according to the specific application.

Finally a last object is to obtain a filter of the aforesaid type and with the aforementioned characteristics that allows to visually appreciate from the outside, without disassembling and with the filter in operation, the fouling situation of its filter element.

These and other objects of the present invention are essentially achieved by means of a filter of the hereinabove defined type, characterized in that it comprises at least a further passage for the fluid, linearly crossing the filter body and in the wall of which the offtake opens to establish communication with said filtration chamber (24).

Vertically positioning said passage, it is possible to obtain a filter that can be defined as vertical separating filter, where a vertical dynamic separation of heavy components is performed, while a sample portion is drawn by the offtake and conveyed, through the chamber and the filter element, towards the analyser.

In order to obtain said variety of application modes of the filter, its body can be provided with four connecting openings for connection according to different modes and/or for mounting directly one or more components or accessories pneumatically connected to the duct, the passage and/or the offtake inside the filter body.

It is therefore clear that the filter can be connected to act as on-line filter, as separating filter or as manifold filter (taking advantage of the non engaged connecting openings to directly mount on the filter body a pressure reducing valve, a manometer, valves or other).

In any case, the filtration chamber is defined on one side, towards the filter body, by said filter element and on the other side, towards the outside, by an airtight closing plate made of transparent material thus allowing to check the fouling degree reached by the filter element.

In the case in which, during utilisation as by-pass filter, it is necessary to perform a more forced vertical dynamic separation, it is possible to mount a variable geometry accessory. Said accessory is essentially constituted by a couple of coaxial tubes with vertical axis, the internal one being connected to the feeding source of the fluid to be separated and forming with the external tube an interspace for the gas sample to go up towards the filter element.

These and other peculiarities and features of the invention will be now further described with reference to an embodiment of the filter, in different modes of use of same, as shown in the accompanying drawings, wherein:
- figure 1 is a section of a filter according to the invention in its condition of by-pass filter, i.e. of vertical separating by-pass filter;
- figure 2 is a view from the bottom of the filter of figure 1, showing the necessary and optional connections in an embodiment with a manifold connector (14);
- figure 3 is a section (turned by 90 degrees with respect to that of figure 1) of the same filter, when used as on-line filter;
- figure 4 is a view from the bottom of the filter of figure 3 showing the necessary and optional connections in an embodiment with two manifold connectors (12 and 16); and
- figure 5 is a section corresponding to that of figure 1 of a vertical by-pass filter equipped with accessory for more forced dynamic separation.

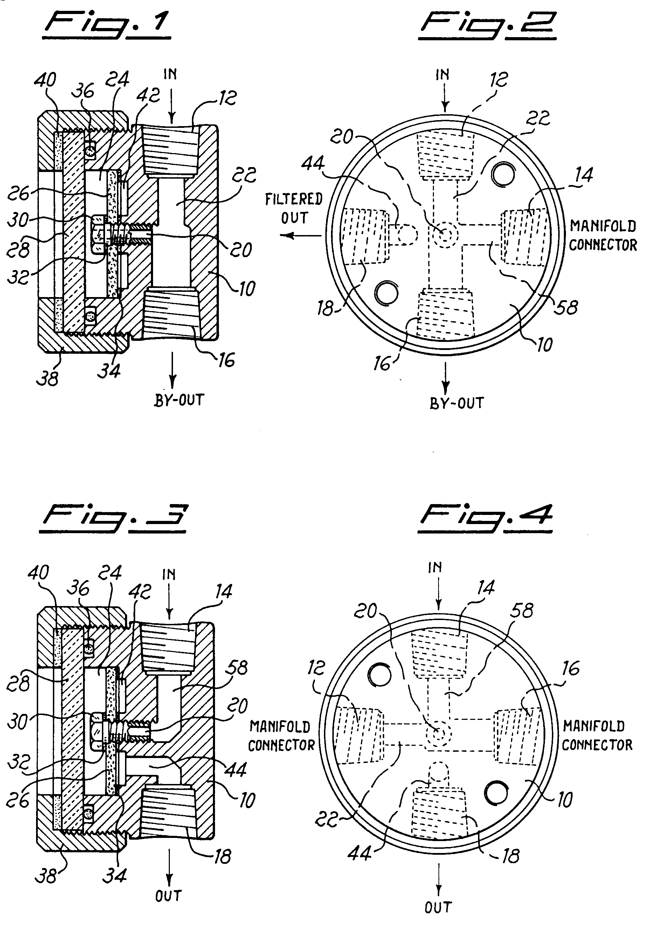

With reference to figures and first of all to figures 1 and 2, the filter according to the invention is structurally constituted by a body 10 in which a plurality of connecting openings are provided, in this particular case four openings 12, 14, 16 and 18 (figure 2), variably connectable as it will be better seen hereinbelow. An offtake 20 is provided from an internal passage 22 towards a filtration chamber 24, internally delimited by a filter element, for instance a micrometallic filter 26, and towards the outside by a transparent plate 28, for instance made of glass, allowing to check, without interfering with operation and without performing disassembling operations, the fouling condition of the filter element 26. The latter is installed in the body 10 by means of a locking screw 30, wherein the hole for the passage of the offtake 20 is provided for, with the filter element 26 resting on an internal gasket 32 and on an external gasket 34.

The transparent plate 28 is accomodated on the body 10 by means of an O ring 36 and held therein by a screwable nut 38 with interposition of a gasket 40.

The passage 22, directly connecting the openings 12 and 16, is arranged in a vertical direction and connected, through said openings, to the feeding source of the sample to be analyzed, that flows from top downwards inside said passage 22, to carry out a vertical dynamic separation of most of the heavy substances (e.g. solid particles) entrained by the sample itself. A small portion of the sample goes through the offtake 20 and into the chamber 24, crosses the filter element 26 and enters the chamber 42, from where it comes out towards the analyser through a duct 44 and the opening 18 (figure 2). The filter therefore acts as by-pass filter or vertical separating filter.

The opening 14, left free in the configuration of figure 2, is connected to the passage 22 and the offtake 20 through the duct 58, and represents one of the embodiments of manifold filter, utilized to mount other accessories thereon, such as for instance a manometer, a safety valve or other (according to the required application).

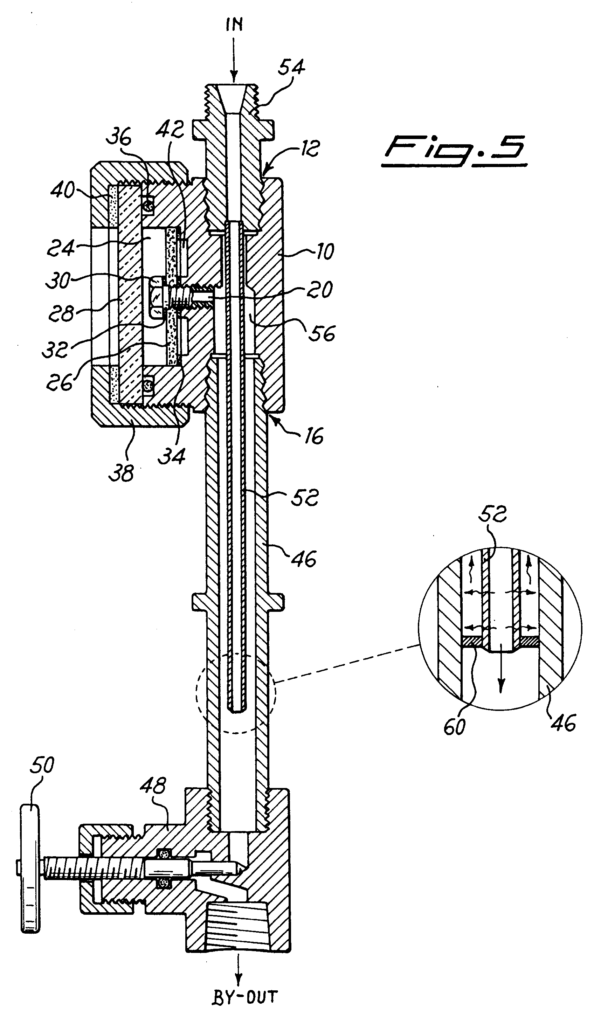

In figures 3 and 4, the same filter of figures 1 and 2 is illustrated in its position of utilization/realization as on-line filter. In said figures 3 and 4 the same reference numbers as in figures 1 and 2 have been used to indicate the same components. As it can be noticed from a comparison with figures 1 and 2, the filter body is rotated by 90 degrees in such a way that the sample is introduced through the opening 14 and the duct 58, passing completely in the offtake 20 and into the chamber 24 to be filtered by the filter element 26 and then to be conveyed through the chamber 42, the duct 44 and the connection 18 to the analyzer. In figure 4 the on-line filter is shown (seen from the bottom) in one of the manifold on-line filter configurations, with two connections (12 and 16) used to mount/thread at will directly on the filter body (without cut-to-size small tubes or other intermediate components) other accessories such as for instance a manometer, a safety valve or other (therefore using the filter body also with a function of manifold connector).

As previously mentioned, the illustrated filter presents considerable advantages versus traditional by-pass filters as well as versus traditional on-line filters. In fact, considering the by-pass filters known so far, a considerable decrease in costs (from 50% to 70%) and a very outstanding reduction of dead volumes are obtained (from values in the region of 40-60 ml in known by-pass filters to values in the region of 2 ml in the filter according to the invention). In comparison with on-line filters, costs are the same or less than those of presently known filters, but with a filtration surface equal or higher, dead volumes with values 1/2 those of known filters and above all a renewability of 100% versus a maximum renewability of 80% in known filters.

When the filter is used in the by-pass mode (figures 1 and 2), it is possible to apply thereto an accessory that allows to obtain a much more forced dynamic separation tailored to the selected application. An application is illustrated in figure 5, where it can be seen that said accessory is essentially constituted by an external tubular element 46 that is mounted/threaded in correspondence with the connecting opening 16, said tubular element 46 being capable of bearing on its downstream end (in the direction of the fluid run) a valve 48, e.g. a needle valve adjustable by means of a handle 50 that is applied to the end of tube 46 in order to regulate the downflow and the speed of the fluid (as outlet from the by-pass unit of most of the non filtered fluid).

Inside the tube 46 there is inserted a second tube 52, that is smaller and extends coaxially to the first one for a certain length and is monted/threaded, by means of a male support 54, in correspondence to the upper connecting opening 12 (inlet for the sample to be filtered).

The external and internal diameters of the internal tube 52 as well as the internal diameter of the external tube 46, and their relevant lengths, are calculated and sized in a way that the fluid is given an appropriate acceleration inside the tube 52, making the heavy compounds pass downstream and downwards, while a small portion of the sample goes up through the interspace provided in between the two tubes 46 and 52, arriving up to a chamber 56, from which it enters the offtake 20 for being filtered by the element 26 and conveyed to the analyser.

It should be noted that the geometry of this separator can be variable; this means that the three aforesaid diameters of the tubes 52 and 46 as well as their lengths can be varied by replacing one or both tubes, in a way to optimize relevant speeds and therefore the separation as a function of the sample properties and the required application.

The latter embodiment, too, allows to obtain considerable advantages of simplification, reduction of costs, reduction of dead volumes and ease of use and maintenance versus the configurations of the known technique.

In particular cases, the tube 52 is constituted by filtering material, for example sintered material eventually coated internally, and the interspace between the tube 46 and the tube 52 is closed at the bottom of the latter, for instance where indicated by reference 60 in the magnified detail given aside of figure 5. So the unit acts as dynamic separator and by-pass filter plus on-line filter in a single body and the filtering internal tube 52 results to be self-cleaning, thanks to the speed of fluids flowing therein, with large surface and with filtering structure any time suitable for the desired application. Especially in the by-pass filter mode, when liquids requiring to be vaporized are filtered, the vaporizing capillary tube is connected/threaded directly to the filter body in correspondence to the opening 18, which results in an important reduction of dead volumes.

## Claims

1. A filter for continuously and directly feeding fluid samples to automatic and/or process equipment for physico-chemical analyses, adapted to be installed on the path of a fluid to be analysed, and of the type comprising a filter body (10) having a fluid inlet duct (58), an offtake (20) connected to said duct (58) and leading to a filtration chamber (24) containing a filtering element (26), as well as an outlet (18) from said chamber downstream the filter element, to feed an analytical instrument, characterized in that it comprises at least a further passage (22) for the fluid, linearly crossing the filter body and in the wall of which the offtake (20) opens to establish communication with said filtration chamber (24).

2. A filter according to claim 1, characterized in that the filter body (10) has four connecting openings (12,14,16,18) for connection according to different modes and/or for direct connection of one or more components or accessories to the duct (58), to the passage (22) and/or to the offtake (20) inside the filter body.

3. A filter according to claim 1 or 2, characterized in that the filtration chamber (24) is delimited on one side, towards the filter body, by said filter element (26) and on the other side, towards the outside, by an airtight closing plate (28) made of transparent material.

4. A filter according to any one of the preceding claims, characterized in that it comprises, upstream and downstream of said fluid passage (22), a couple of aligned connecting openings for assembling a tubular accessory with variable geometry suitable for forced vertical dynamic separation.

5. A filter according to claim 4, characterized in that said variable geometry accesory for forced vertical dynamic separation comprises a couple of coaxial tubes (46, 52) with vertical axis, the internal tube (52) being connected to the feeding source of the fluid to be separated and forming with the external tube (46) an interspace for the sample to go up towards the filter unit (20, 24, 26).

6. A filter according to claim 5, characterized in that at least the internal tube (52) can be replaced with tubes having different external and/or internal diameter and/or different length, to adjust the flowing speed of the by-pass fluid and of the fluid going up towards the outlet filter unit.

7. A filter according to claim 6, characterized in that the external tube (46) is mounted on the lower connecting opening (16) and the internal tube (52) is mounted on the upper connecting opening (12) aligned on the passage (22) of the filter body.

8. A filter according to any one of the claims 5, 6 or 7, characterized in that the internal tube (52) is made of a filtering material and the interspace between the external tube (46) and the internal tube (52) is closed (60) in the vicinity of the downstream end of the latter.

9. A filter according to claim 8, characterized in that said internal tube (52) is made of sintered material coated on the inside to improve self-cleaning thereof.

10. A filter according to any one of the preceding claims, characterized in that a vaporizing capillary tube is connected/threaded directly on the filtrate outlet opening (18) in the filter body.

11. Use of a filter according to any one of the preceding claims as by-pass filter for vertical separation, wherein said passage (22) is vertically oriented and the fluid to be analyzed is fed thereto from the top.

12. Use of a filter according to any one of the claims 4 to 9 and 11 as by-pass filter for forced vertical dynamic separation.

13. Use of a filter according to any one of the claims 1 to 3 and 9 as on-line filter, wherein the fluid to be analyzed is fed to said duct (58).

14. Use of a filter according to claims 9 and 13 as self-cleaning by-pass filter with large surface, with serially incorporated on-line filter.

15. Use of a filter according to claim 10 as filter for liquids destined for vaporization downstream of the filter itself.

16. Use of the filter according to any one of the claims 11 to 15 as multiple connector or manifold filter, wherein one or more accessories (such as manometers, safety valves or others) are mounted directly on one or more of the connecting openings (12, 14, 16) not used for the fluid inlet/outlet.

## Patentansprüche

1. Filter zum kontinuierlichen und direkten Zuführen von Fluidproben zu einer automatischen und/oder Verarbeitungsanlage für physikalisch-chemische Analysen, das angepaßt ist, um in den Strömungsweg eines zu analysierenden Fluides eingebaut zu werden, und von der Art ist, die ein Filtergehäuse (10) umfaßt, das sowohl einen Fluideinlaßkanal (58), einen Abzugskanal (20), der mit dem Kanal (58) verbunden ist und zu einer Filterkammer (24) führt, die ein Filterelement (26) enthält, als auch einen Auslaß (18) von der Kammer stromabwärts von dem Filterelement besitzt, zum Speisen eines analytischen Gerätes, dadurch gekennzeichnet, daß es mindestens einen weiteren Kanal (22) für das Fluid umfaßt, der das Filtergehäuse linear kreuzt und in dessen Wand sich der Abzugskanal (20) öffnet, um eine Verbindung mit der Filterkammer (24) herzustellen.

2. Filter nach Anspruch 1, dadurch gekennzeichnet, daß das Filtergehäuse (10) vier Anschlußöffnungen (12, 14, 16, 18) zum Anschluß entsprechend verschiedenen Betriebsarten und/oder zum direkten Anschluß einer oder mehrerer Komponenten oder Zusatzteile an den Kanal (58), an den Kanal (22) und/oder an den Abzugskanal (20) in dem Filtergehäuse besitzt.

3. Filter nach Anspruch 1 oder 2, dadurch gekennzeichnet, daß die Filterkammer (24) an einer Seite zum Filtergehäuse hin durch das Filterelement (26) und an der anderen Seite zur Außenseite hin durch eine luftdichte, aus durchsichtigem Material hergestellte Verschlußplatte (28) begrenzt ist.

4. Filter nach einem der vorstehenden Ansprüche, dadurch gekennzeichnet, daß es stromaufwärts und stromabwärts des Fluidkanales (22) ein Paar von fluchtenden Anschlußöffnungen zum Einbauen eines rohrförmigen Zusatzteiles mit variabler Geometrie umfaßt, das für die vertikale, dynamische Zwangsabtrennung geeignet ist.

5. Filter nach Anspruch 4, dadurch gekennzeichnet, daß das Zusatzteil mit variabler Geometrie zur vertikalen, dynamischen Zwangsabtrennung ein Paar von koaxialen Rohren (46, 52) mit vertikalen Achsen umfaßt, wobei das Innenrohr (52) mit der Zuführungsquelle des abzuscheidenden Fluides verbunden ist und mit dem Außenrohr (46) einen Zwischenraum für das Aufsteigen der Probe zu der Filtereinheit (20, 24, 26) bildet.

6. Filter nach Anspruch 5, dadurch gekennzeichnet, daß mindestens das Innenrohr (52) durch Rohre ersetzt werden kann, die unterschiedliche Außen- und/oder Innendurchmesser und/oder verschiedene Längen haben, um die Strömungsgeschwindigkeit des umgeleiteten Fluides und des zu der Auslaßfiltereinheit aufsteigenden Fluides einzustellen.

7. Filter nach Anspruch 6, dadurch gekennzeichnet, daß das Außenrohr (46) an der unteren Anschlußöffnung (16) und das Innenrohr (52) an der oberen Anschlußöffnung (12) mit dem Kanal (22) des Filtergehäuses ausgerichtet befestigt ist.

8. Filter nach einem der Ansprüche 5, 6 oder 7, dadurch gekennzeichnet, daß das Innenrohr (52) aus einem Filtermaterial hergestellt und der Zwischenraum zwischen dem Außenrohr (46) und dem Innenrohr (52) in der Nähe des stromabwärtigen Endes des letzteren geschlossen (60) ist.

9. Filter nach Anspruch 8, dadurch gekennzeichnet, daß das Innenrohr (52) aus Sintermaterial hergestellt ist, das auf der Innenseite beschichtet ist, um seine Selbstreinigung zu verbessern.

10. Filter nach einem der vorstehenden Ansprüche, dadurch gekennzeichnet, daß ein Verdampfungskapillarrohr direkt an der Filtratauslauföffnung (18) in dem Filtergehäuse angeschlossen/angeschraubt ist.

11. Verwendung eines Filters nach einem der vorstehenden Ansprüche als Nebenschlußfilter zur vertikalen Abtrennung, bei dem der Kanal (22) vertikal ausgerichtet ist und das zu analysierende Fluid diesem von oben zugeführt wird.

12. Verwendung eines Filters nach einem der Ansprüche 4 bis 9 und 11 als Nebenschlußfilter zur vertikalen dynamischen Zwangsabtrennung.

13. Verwendung eines Filters nach einem der Ansprüche 1 bis 3 und 9 als direktgekoppeltes Filter, bei dem das zu analysierende Fluid dem Kanal (58) zugeführt wird.

14. Verwendung eines Filters nach den Ansprüchen 9 und 13 als selbstreinigendes Nebenschlußfilter mit großer Oberfläche mit in Reihe eingebautem direktgekoppelten Filter.

15. Verwendung eines Filters nach Anspruch 10 als Filter für Flüssigkeiten, die zur Verdampfung stromabwärts des Filters selbst bestimmt sind.

16. Verwendung des Filters nach einem der Ansprüche 11 bis 15 als Vielfachanschluß- oder als Mehrfachfilter, bei dem ein oder mehrere Zusatzteile (wie Manometer, Sicherheitsventile oder andere) direkt an einer oder mehreren der Anschlußöffnungen (12, 14, 16), die nicht für den Fluideinlaß/-auslaß verwendet werden, angeschlossen sind.

## Revendications

1. Filtre pour alimenter de façon continue et directe, en échantillons de fluide, un équipement de procédé et/ou automatique pour des analyses physico-chimiques, conçu pour être installé sur le trajet d'un fluide à analyser, et du type comprenant un corps de filtre (10) ayant une conduite d'admission de fluide (58), un canal de décharge (20) relié à ladite conduite (58) et conduisant à une chambre de filtration (24) contenant un élément de filtrage (26), ainsi qu'un orifice de sortie (18) depuis ladite chambre en aval de l'élément formant filtre, pour alimenter un instrument analytique, caractérisé en ce qu'il comprend au moins un passage supplémentaire (22) pour le fluide croisant de façon linéaire le corps de filtre et dans la paroi duquel le canal de décharge (20) s'ouvre pour établir une communication avec ladite chambre de filtration (24).

2. Filtre selon la revendication 1, caractérisé en ce que le corps de filtre (10) possède quatre ouvertures de connexion (12, 14, 16, 18) pour une connexion selon différents modes et/ou pour une connexion directe d'un ou de plusieurs composants ou accessoires à la conduite (58), au passage (22) et/ou au canal de décharge (20) à l'intérieur du corps de filtre.

3. Filtre selon la revendication 1 ou 2, caractérisé en ce que la chambre de filtration (24) est délimitée sur un côté, vers le corps de filtre, par ledit élément formant filtre (26) et sur l'autre côté, vers l'extérieur, par une plaque de fermeture étanche à l'air (28) faite d'une matière transparente.

4. Filtre selon l'une quelconque des revendications précédentes, caractérisé en ce qu'il comprend, en amont et en aval dudit passage de fluide (22), un couple d'ouvertures de connexion alignées pour monter un accessoire tubulaire ayant une géométrie variable appropriée pour une séparation dynamique verticale forcée.

5. Filtre selon la revendication 4, caractérisé en ce que ledit accessoire à géométrie variable pour une séparation dynamique verticale forcée comprend un couple de tubes coaxiaux (46, 52) ayant un axe vertical, le tube interne (52) étant relié à la source d'alimentation en liquide à séparer et formant, avec le tube externe (46), un espace pour que l'échantillon monte vers l'unité formant filtre (20, 24, 26).

6. Filtre selon la revendication 5, caractérisé en ce qu'au moins le tube interne (52) peut être remplacé par des tubes ayant un diamètre interne et/ou externe différent et/ou une longueur différente, pour régler la vitesse d'écoulement du liquide dévié et du liquide montant vers l'unité formant filtre de sortie.

7. Filtre selon la revendication 6, caractérisé en ce que le tube externe (46) est monté sur l'ouverture de connexion inférieure (16) et en ce que le tube interne (52) est monté sur l'ouverture de connexion supérieure (12) alignées sur le passage (22) du corps de filtre.

8. Filtre selon l'une quelconque des revendications 5, 6 ou 7, caractérisé en ce que le tube interne (52) est fait d'une matière de filtrage et en ce que l'espace entre le tube externe (46) et le tube interne (52) est fermé (60) au voisinage de l'extrémité aval de ce dernier.

9. Filtre selon la revendication 8, caractérisé en ce que ledit tube interne (52) est fait d'une matière frittée revêtue sur l'intérieur pour améliorer la capacité autonettoyante de ce dernier.

10. Filtre selon l'une quelconque des revendications précédentes, caractérisé en ce qu'un tube capillaire à vaporisation est relié/fileté directement sur l'ouverture d'orifice de sortie de filtrat (18) dans le corps de filtre.

11. Utilisation d'un filtre selon l'une quelconque des revendications précédentes en tant que filtre de dérivation pour une séparation verticale, dans lequel ledit passage (22) est orienté à la verticale et dans lequel le liquide à analyser est délivré à ce dernier par le dessus.

12. Utilisation d'un filtre selon l'une quelconque des revendications 4 à 9 et 11 en tant que filtre de dérivation pour une séparation dynamique verticale forcée.

13. Utilisation d'un filtre selon l'une quelconque des revendications 1 à 3 et 9 en tant que filtre en direct, dans lequel le liquide à analyser est délivré à ladite conduite (58).

14. Utilisation d'un filtre selon les revendications 9 et 13 en tant que filtre de dérivation autonettoyant avec une grande surface, ayant un filtre en direct incorporé en série.

15. Utilisation d'un filtre selon la revendication 10 en tant que filtre pour des liquides destinés à entre vaporisés en aval du filtre lui-même.

16. Utilisation d'un filtre selon l'une quelconque des revendications 11 à 15 en tant que filtre à collecteur ou à connecteurs multiples, dans lequel un ou plusieurs accessoires (tels que des manomètres, soupapes de sécurité ou autres) sont directement montés sur une ou plusieurs des ouvertures de connexion (12, 14, 16) non utilisées pour l'admission/évacuation de liquide.
